**Europäisches Patentamt**

**European Patent Office**

**Office européen des brevets**

(19)

(11) Publication number : **0 476 977 A1**

## (12) EUROPEAN PATENT APPLICATION

(21) Application number : **91308481.0**

(22) Date of filing : **17.09.91**

(51) Int. Cl.⁵ : **B60N 2/08, B60N 2/24**

(30) Priority : **18.09.90 GB 9020328**
**03.11.90 GB 9023961**
**27.06.91 GB 9113944**

(43) Date of publication of application :
**25.03.92 Bulletin 92/13**

(84) Designated Contracting States :
**DE ES FR GB IT SE**

(71) Applicant : **NOMADIC WHEELS LIMITED**
**Coombe Park, Ashprington**
**Totnes, Devon TQ9 7DY (GB)**

(72) Inventor : **Leighton-Boyce, Robert Arthur**
**Coombe Park, Ashprington**
**Totnes, Devon TQ9 7DY (GB)**

(74) Representative : **Harrison, Ivor Stanley**
**Withers & Rogers 4 Dyer's Building Holborn**
**London EC1N 2JT (GB)**

(54) **Slidable vehicle seat.**

(57) A seat for vehicles such as recreational vehicles and buses is slidable on floor rails (5) and has a tiltable squab (1) which in its lowered position acts through an arm (216) to prevent the disengagement of a bolt (210) from an aperture (111) in one of the rails (5). The bolt forms part of locking means (210-220) for preventing the seat from moving longitudinally of the rail from a selected position therealong. The structure (6, 15) of the seat may include anchorage points for a seat belt and be sufficiently robust to withstand collision forces and loads on the seat belt.

EP 0 476 977 A1

Jouve, 18, rue Saint-Denis, 75001 PARIS

Fig. 7

The present invention relates to vehicle seats of the type which are slidable on rails mounted on or adjacent the floor of the vehicle and include a squab, a backrest, and means for locking the seat relative to the rails in any one of a plurality of positions therealong.

It is desirable to provide vehicles such as recreational vehicles, minibuses, urban buses and coaches with slidable seats in order that the seating configuration can be varied selectively between passenger-carrying configurations in which the seats are spaced, for example, in rows, along the rails and a load-carrying configuration in which at least some of the seats are stowed close together to provide a clear floor space for luggage or other loads.

It is recognised, however, that the seat sliding systems conventionally used in motor cars, where the seats have to be able to slide over a distance of the order of 150-450 mm, are not appropriate to buses or the like, where distances of sliding of up to several metres may be required. The reason for this is that car-seat sliding systems, for example, involving runners slidable in guide rails with the interposition of ball-bearings, have close tolerances and cannot be scaled up to the lengths required in buses or the like because the necessary accuracy of installation of the rails and other components cannot be ensured. Even if accurate installation were possible, the flexing of the vehicle body would create inaccuracies and misalignments in use.

It is also envisaged that regulations in many Western countries will require the provision of seat belts for all seats in vehicles such as minibuses, urban buses and coaches. All aircraft seats are already provided with seat belts but these are simply of the lapbelt type and, ideally, for road vehicles 3-point belts including a diagonal body strap and a lap belt are preferred. Such belts are already in common use both for front and rear seats of motor cars but they are attached to the body of the vehicle rather than to the seat itself because of the strength required in the fixings to withstand the enormous forces which come into play during a collision, particularly at the upper, that is, the shoulder, anchorage point.

In view of these forces, and various other considerations, it is difficult to provide suitable anchorages for 3-point seat belts for seats which are not immediately adjacent the bodywork of a vehicle, for example, for the aisle seats of a coach. A further requirement here is to fulfil the modern standards of luxury expected in coaches: in particular, it is expected that coach seats should recline to facilitate sleeping on long or overnight journeys. Strong anchorages for a seat belt cannot, therefore, be provided by a simple increase in the strength of the seat structure. If seat belts are to be fitted to the seat structure, however, the structure must be strengthened with the obvious increase in costs that this entails.

The object of the present invention, therefore, is to provide a slidable vehicle seat which satisfies the aforesaid requirements.

Accordingly, the present invention provides a seat of the type mentioned at the beginning, characterised in that the squab is tiltable relative to the backrest between a lowered position of use in which it is substantially horizontal and a raised or stowed position in which it is substantially vertical, and in that the locking means include a bolt for engagement in any one of a plurality of spaced-apart apertures in a respective rail to prevent the seat from moving longitudinally on the rail from a selected position and a control member acting between the bolt and the seat squab to prevent the bolt from being disengaged from the rail when the squab is in its lowered position.

The bolt may be spring-loaded so that it is biased into engagement with the apertures in the rail and it may be possible manually to engage the bolt even when the squab is raised, for example, to lock the seat along with several other seats in a stowed position at one end of the vehicle in a load-carrying configuration.

The control member may comprise an abutment which is connected to the bolt and is engageable by the seat squab when the squab is in its lowered position to prevent the release of the bolt. The abutment may comprise a lever which is pivoted on the seat and one arm of which projects upwardly so as to be engageable with the undersurface of the squab in the lowered position thereof whilst its other arm is connected by a toggle link to the bolt.

Alternatively, the control member may comprise an arm which is pivoted at one end on the squab and at its other end on the bolt whereby the raising and lowering of the squab respectively releases the bolt from and engages it with the rail. The pivotal connection between the arm and the bolt may be formed by a plate having a slot in which an appendage of the bolt is engaged and which is of a shape such as to allow the bolt to be re-engaged manually with the rail when the squab is raised.

Preferably, a respective bolt is provided on each side of the seat. Each bolt may be acted upon by a respective control member or the two bolts may be acted upon by a common control member, as appropriate.

The seat may be mounted on the rails by rollers or, more preferably, sliding blocks which can run on or within the rails. The rails may be of any suitable section, for example, H- or C-section, to provide guide channels for the rollers or blocks but must provide adequate restraint against sideways and vertical movement. The apertures in the rails engageable by the bolts of the locking means are preferably wider transversely of the rails than longitudinally thereof, in order to reduce the need for very accurate installation of the rails relative to one another on the floor of the vehicle. Any transverse movement of the bolts in the apertures, and hence of the seats relative to the rails, which could be allowed by the lateral clearance between the bolts and the apertures is prevented by the engagement of the sliding blocks or rollers in the guide channels of the rails.

Preferably, the squab and the backrest of the seat are supported between two side support structures which can be mounted slidably on respective rails, the side support structures being interconnected by a cross member beneath the level of the squab, one support structure having an upper anchorage point for a seat belt and first and second lower anchorage points for a seat belt being provided at opposite sides of the squab such that, in use, a seat belt having a lap portion extending across the seat occupant's lap between the lower anchorage points and a body portion extending diagonally across the occupant's body from the second lower anchorage point to the upper anchorage point will restrain the occupant in the seat during a collision, the collision forces being withstood by the seat itself.

Each side support structure of the seat preferably comprises a lower structure which is mounted on the respective rail and an upper pillar which is pivotally mounted on the lower structure, the two lower structures being interconnected by the cross beam and supporting the squab pivotably between them and the two pillars supporting the backrest between them and being pivotable at least between an upright position of use of the backrest and a reclined position of use. Releasable locking means are provided for locking each support pillar positively in the upright position to prevent pivoting in either sense. Locking means may also lock the seat in the reclined position, particularly if this is a partially-reclined position for use during travel, rather than a horizontal position for use when the vehicle is stationary. Several optional positions may be provided for the backrest. The squab may also be locked in its lowered and raised positions.

In order to provide the seat with the necessary stability, each lower side support structure is preferably mounted on its rail at two positions spaced apart like the legs of a chair, that is, forward and rearward of the centre of gravity of the seat and its occupant and with a spacing of the order of 400 mm. Each lower side support structure may comprise a body supported on legs but is preferably formed from steel plate. The rails are preferably also anchored to the floor of the vehicle at similarly-spaced anchorage points. Longer rails may support several seats, as for example in a coach.

The seat of the invention preferably also includes a headrest supported above the backrest either by the backrest itself or by the side support pillars. It may be integral with the backrest or movable relative thereto. Armrests may also be provided.

The seat belt used with the seat of the invention is preferably of the known inertia-reel type. The inertia reel itself would be fixed to the first lower anchorage point either on a side support structure, preferably the respective lower structure, or on the cross beam immediately adjacent this structure with the belt extending upwardly from the reel, possibly through a duct formed in the side structure, to an upper anchorage point, for example a slotted guide at the top of one of the side support pillars. The second lower anchorage point would be provided with a catch member engageable by a buckle captive on the belt. The catch member would preferably be mounted at the upper end of a flexible stalk, the lower end of which may be fixed either to the seat side support structure, preferably the lower structure, or to the cross beam adjacent the side support structure.

The above features of the invention make the seat particularly versatile. At least some parts of the two side support structures may be designed to be identical to reduce manufacturing costs. They may also be employed to support single seats or bench seats for two or more occupants: in this case, the two end seats may both be provided with full seat belts. The end support structures may also be arranged to carry different types of squab and backrest structures, suitable for a driving seat or front passenger seat, for rear bench seats in estate cars or mini-buses or for coach seats.

The implementation of the invention also enables slidable seats to be fitted with full seat belts. These seats are likely to be particularly useful in recreational vehicles, such as motor caravans, and in minibuses and like vehicles where, as explained above, it is desirable to be able to change the seating from one use to another or simply to stow it away at times. It is also likely to be useful in coaches to allow the seats to be moved closer together to accommodate more passengers or to allow some seats to be removed to provide greater leg-room for a smaller number of passengers. The seats of the invention may also safely be reversed so that two such seats may be used facing each other with a table between them.

The invention will now be more particularly described, by way of example, with reference to the accompanying drawings, in which:

Figure 1 is a schematic side elevational view of one embodiment of a seat according to the present invention;

Figure 2 is a front elevational view of the seat of Figure 1;

Figure 3 is a side view similar to Figure 1, showing parts of the seat in a different configuration;

Figures 4 and 5 are schematic side elevations of the seat of Figure 1 showing one embodiment of locking means for the seat in the locked and unlocked conditions, respectively;

Figure 6 in a view of part of the locking means in the unlocked condition, taken on arrow VI of Figure 5;

Figure 7 is a schematic perspective view showing a second embodiment of locking means for the seat of Figure 1 in a locked condition, and

Figures 8a and 8b are two scrap sectional views showing the locking means of Figure 7 in the locked and unlocked conditions, respectively.

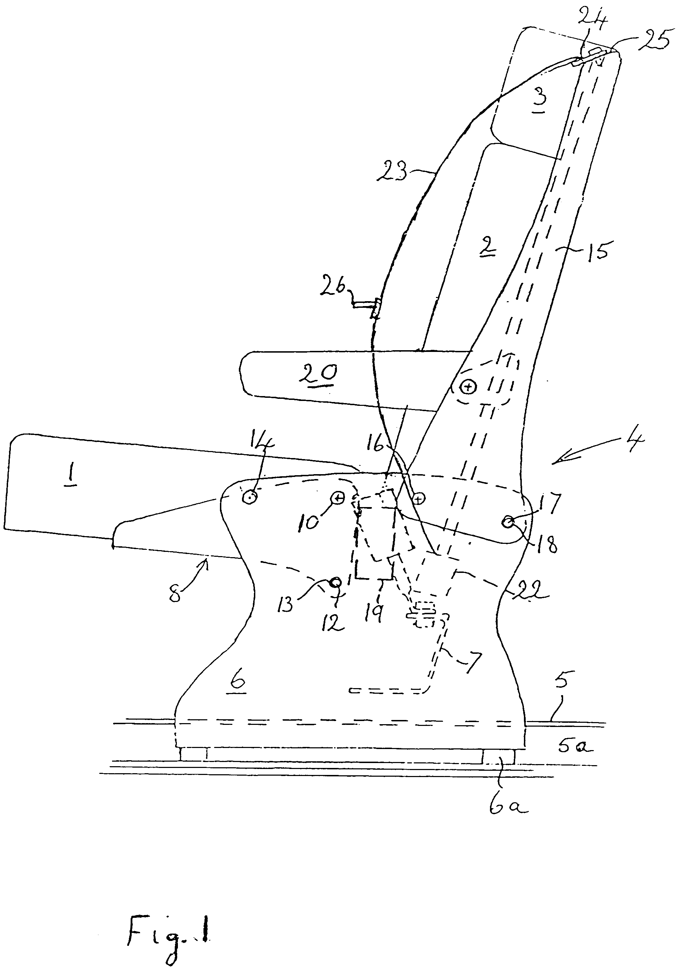

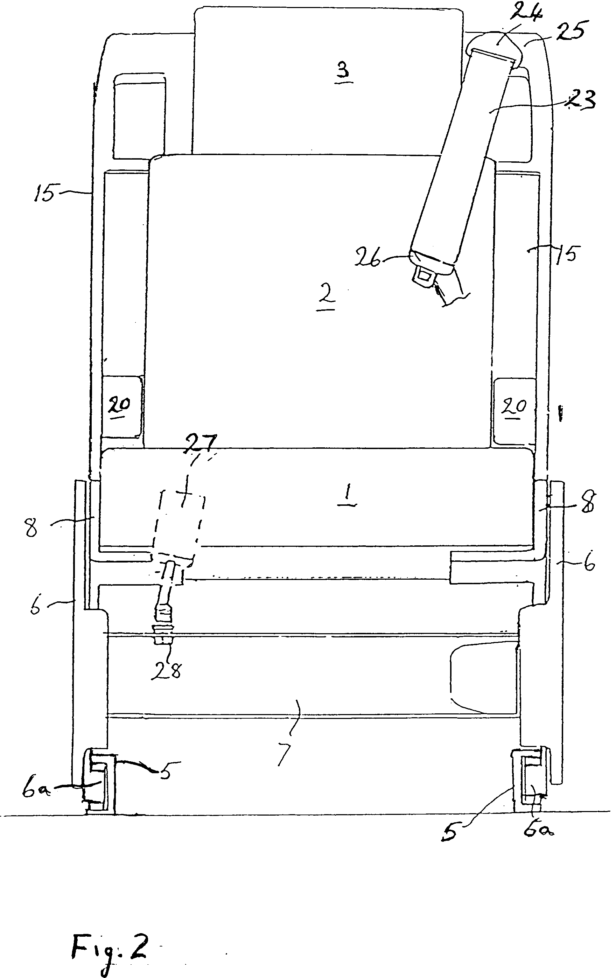

With reference to Figures 1 and 2 of the drawings, a vehicle seat is shown having a squab or cushion 1 and a backrest 2 surmounted by a headrest 3. The squab, backrest and headrest are carried between two side support structures, generally indicated 4, each mounted slidably on a respective C-section, steel rail 5 fixed to the floor of the vehicle (not shown). The rails 5 extend substantially parallel to the length of the vehicle and it will be assumed for the purposes of this description that the seat is facing forwardly, in the normal direction of travel of the vehicle.

Each side support structure 4 includes a lower, 8mm-thick, steel support plate 6 mounted directly on the respective rail 5 and extending in a vertical plane parallel thereto. More particularly, each side plate 6 is generally square in side profile but with conversely curved sides and has sliding blocks 6a adjacent its front and rear lower corners which slide in an outwardly-facing channel 5a of the rail 5. The two support plates 6 are interconnected by a steel, channel-section cross beam 7 which extends below the level of the squab 1 and is welded to the two plates 6 at its ends. The sliding blocks 6a are made from a suitable plastics material in order to minimise noise. Such blocks have been found to be effective in clearing foreign objects from the guide channels 5a during sliding and thus not to be prone to jamming.

Each side support structure 4 further includes a steel squab-support bracket 8 comprising a generally elongate-triangular plate which lies in a vertical plane adjacent the respective support plate 6 and is pivotally mounted thereon by means of a horizontal-axis pivot pin 10. The pin 10 is located near the centre of the upper edge of the support plate 6 and supports the bracket 8 adjacent one corner defined by the shortest edge.

In the normal position of use of the seat, the bracket 8 projects forwardly of the support plate 6 and supports the squab 1 by means of a flange which projects from the edge of the bracket plate opposite the pivot pin 10. The squab 1 is locked in this cantilevered, substantially-horizontal position by means of a spring-biased bolt 12 carried by the bracket 8 at its other corner defined by its shortest edge and engageable in a cooperating aperture 13 in the adjacent support plate 6. The spring-bolt 12 is not shown in detail since it may be of a type known in the art; the spring-bolts 12 of the two support brackets 8 of the seat are preferably operable by a common lever (not shown) for example by means of Bowden cables.

In the position of use shown in Figure 1, the squab is in fact inclined upwardly from the support plate 6 at an angle of about 5° to the horizontal. This is chosen as a comfortable angle for sitting but the squab could be supported horizontally or at some other angle by suitable choice of the positions of the bolt 12 and its cooperating aperture 13.

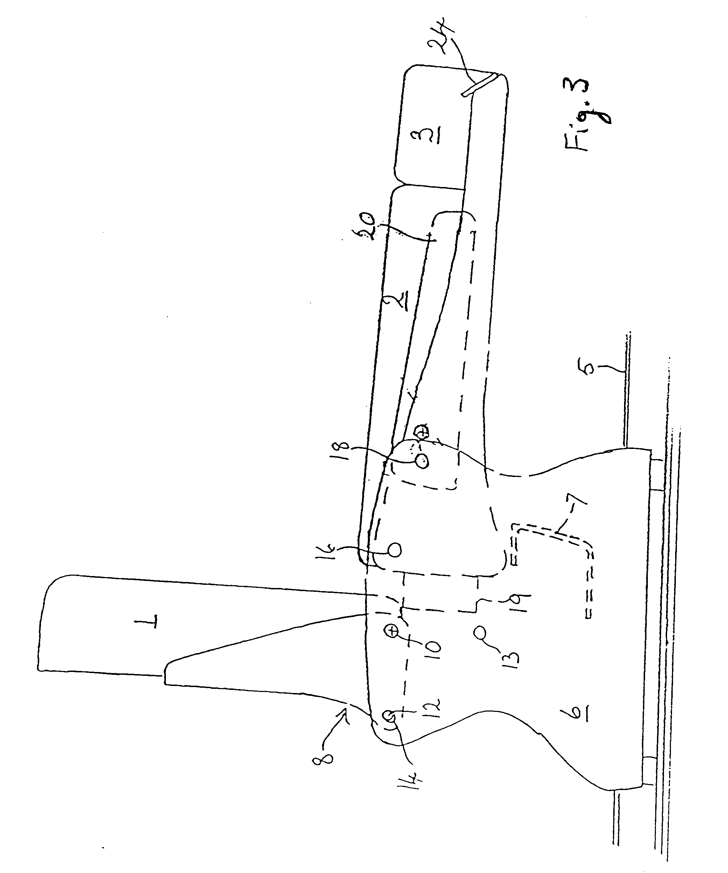

The bolts 12 are releasable from the apertures 13 to allow the squab 1 to be tilted upwardly into a substantially vertical position shown in Figure 3, in which the bolt is engageable in a further aperture 14 near the upper edge of the support plate 6. The squab 1 may be tilted to this position when not required for use and to facilitate cleaning or other activities in the vehicle in which the seat is installed.

Turning now to the backrest 2, this is supported by two cast-aluminium-alloy pillars 15, each forming part of a respective side support structure 4. Each pillar 15 tapers upwardly from a base which is broad longitudinally of the vehicle and is pivoted adjacent its front lower corner about a horizontal-axis pivot pin 16 fixed to a respective support plate 6. The pillars 15 support the backrest 2 at an angle of about 15° to the vertical in its normal position of use and, in this position, bolts 17 adjacent the rear lower corners of the pillar bases engage in cooperating apertures 18 in the side support plates 6. The bolts 17 are spring biased into the apertures 18 and are operable by a common lever (not shown) like the bolts 12 for the squab 1.

The bolts 17 can be released from engagement with the apertures 18 to allow the backrest to be reclined to the horizontal position shown in Figure 3. In this position, the base of each pillar 15 abuts a respective stop block 19 provided on the inner face of the adjacent plate 6 to prevent the backrest from pivoting beyond this position. The backrest 2 can be used in its reclined position shown in Figure 3 together with the squab 1 in its normal position, shown in Figure 1, to form a bed.

The embodiment of the invention shown in the drawings provides two positions of use for the backrest 2 but it will be appreciated that alternative or additional positions could be provided. For example, the backrest could be tiltable into a fully-upright position for compact storage (with the squab 1 also in its raised position) and to facilitate cleaning or uses of the vehicle which do not require the seat. It could also be tilted into a partially-reclined position like that provided for sleeping in aircraft. The back rest may be lockable in such positions by the provision of suitably-located apertures in the side plates 6 for engagement by the bolts 17.

The seat shown in the drawings also has an armrest 20 pivotably mounted at a convenient height on each pillar 15. Each armrest 20 is pivotable between a projecting, substantially horizontal position of use shown in Figure 1 and a stowed position shown in Figure 3 in which it lies against its supporting pillar 15.

Conveniently, the upper ends of the support pillars 15 are formed with apertures 15a so that they can be used as hand-grabs.

A further, major feature of the seat shown in the drawings is a 3-point seat belt attached to the seat structure. The seat belt is of known inertia-reel type and its operation will not be described in detail.

The inertia-reel storage casing, indicated 22, is fixed to a first lower anchorage point on the cross beam 7 adjacent the inner face of one side support plate 6. From here, the belt itself, indicated 23, runs up through a swivelling slotted guide 24 of conventional type fixed to an upper anchorage point 25 at the top of the pillar 15, adjacent the headrest 3.

A buckle 26 captive on the part of the belt 23 which runs back down from the guide 24 can be drawn across the seat occupant's body to fix into a catch 27 provided at the opposite side of the squab 1 from the reel 22. The catch 27 is carried on a flexible stalk which is fixed by a bolt 28 to a second lower anchorage point on the steel beam 7 which extends between the side plates 6, beneath the level of the squab 1. The belt 23 may thus be used in the conventional manner for 3-point, inertia-reel belts to provide a diagonal strap across the body from the slotted guide 24 at one shoulder to the buckle 26/catch 27 connection at the opposite hip and from here, across the lap, back to the inertia-reel casing 22 or to the side support plate 6 immediately adjacent the casing.

The seat belt attachments and seat structure are designed to enable the seat belt to fulfil its intended safety function in a collision and in accordance with the current regulations. More specifically, the upper anchorage point 25 should withstand a forward load of at least 880 kg weight and the two lower attachment points together a diagonally-upward load of about 1400 kg weight.

In the event of a frontal collision, the effect of the forward load at the upper end of the pillar 15 is converted into a very considerable moment of inertia about the pivot pin 16 and the locating bolt 17, requiring the use of 16 mm diameter steel pins for these members. From here, the load acts through the side support plates 6, tending to pivot the seat structure forwardly about the front sliding blocks which are captive in the rail channels 5a. This tends to tear the rear blocks from the rail channels 5a and to tear the rails 5 from the floor of the vehicle. The strength required to withstand these forces is provided by the choice of steel sections 6 mm thick and 60 mm high for the rails and their fixing to the floor at intervals no larger than the spacing of the blocks 6a, that is, about 400 mm.

An added bonus of the seat of the invention over conventional seats, for which the seat belts are attached to the vehicle body, is in the added protection given to the seat passengers in a collision from the rear. Conventional seats tend to collapse in such a collision, the seat belts providing scarcely any protection whatsoever. It is envisaged that the seat described above, however, will restrain the passenger more or less equally in a frontal or a rearward collision.

The seat may thus be mounted in a vehicle facing forwardly or rearwardly.

The seat shown in the drawings is a single-passenger seat with the inertia reel fitted at the left-hand side. The reel and attachments could, however, be fitted the opposite way round without any modification of the side support structures 4. Furthermore, the cross beam 7 could be lengthened to allow two or more seats to be accommodated between the support structures 4. Both outer seats could then have 3-point seat belts, although any intermediate seat could only be fitted with a lap belt anchored to the underlying beam.

The squab, backrest and headrest shown schematically in the drawings are constituted by base or backing boards upholstered with suitable padding and covered with appropriate fabric. The base or backing boards are simply bolted to flanges of the brackets 8 and pillars 15 respectively. Other forms of squab, backrest and headrest, for example with tubular alloy frames or moulded plastics shells could, however, be used and fixed appropriately to the side support structures 4.

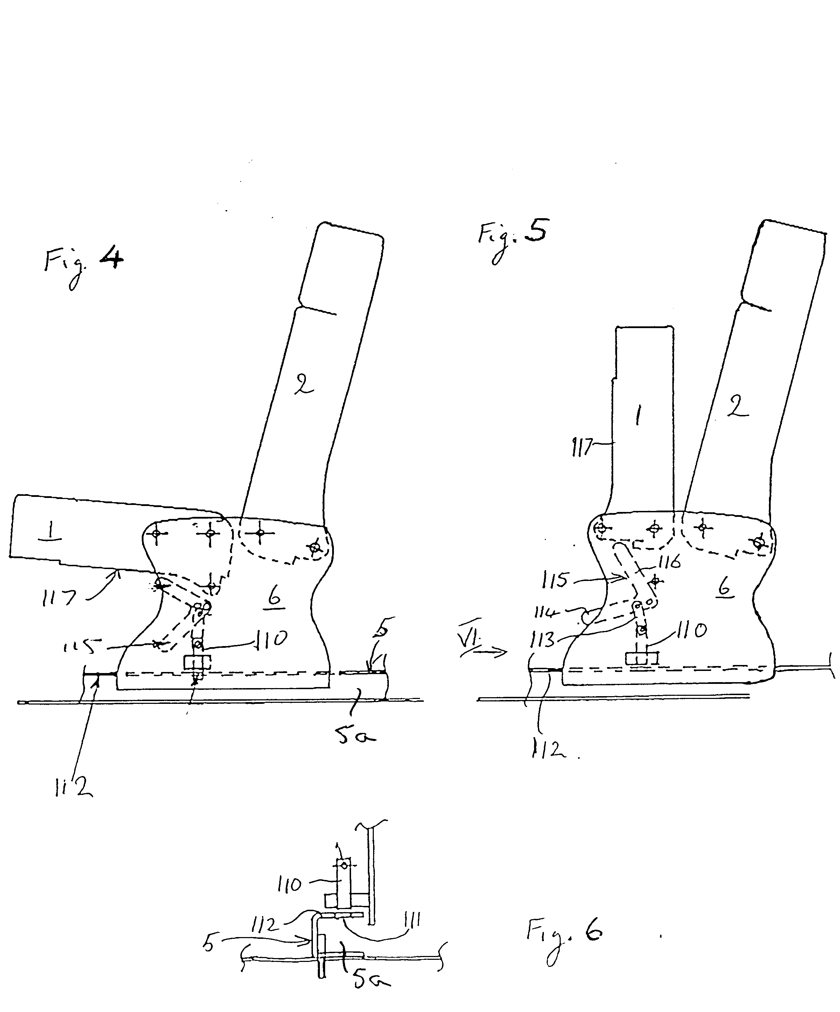

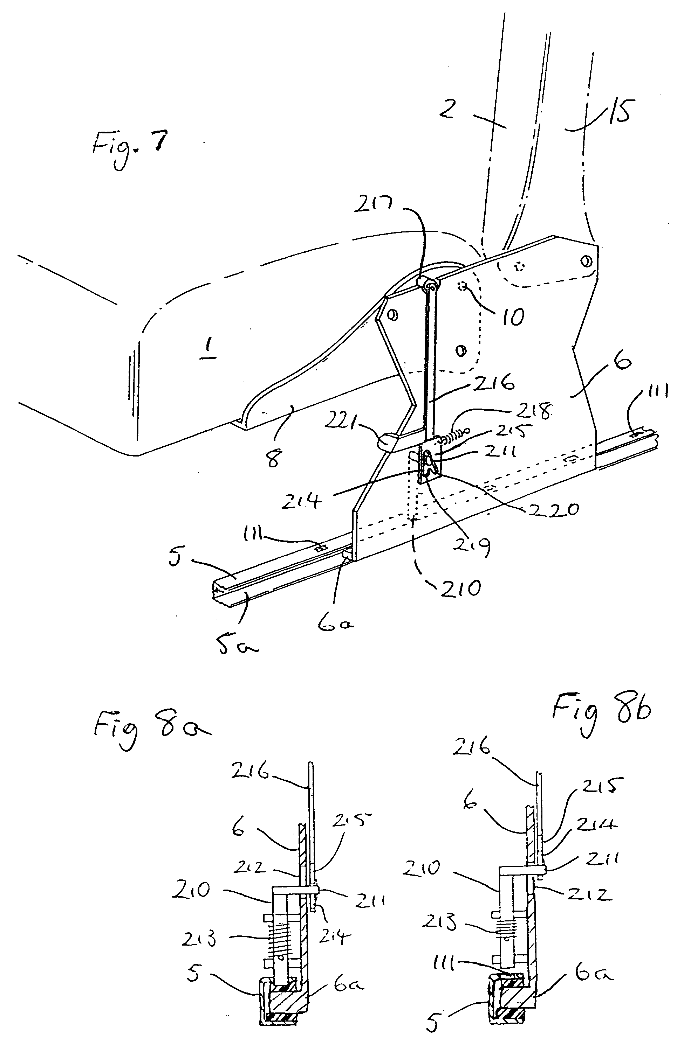

As described above, the seat is slidable on the rails 5, and the seat and rails are provided with locking means which enable the seat to be located positively at any one of several positions along the rails. Reference will now be made to Figures 4 to 6 and to Figures 7, 8a and 8b which show two embodiments of the locking means for the seat.

More particularly, in the embodiment of Figures 4 to 6, the locking means include a square-section, vertical-axis bolt 110 carried by a respective side plate 6 of the seat and engageable in an aperture 111 in the upper flange 112 of the corresponding rail 5. The flange 112 in fact has a plurality of apertures 111 spaced apart along it which can be engaged by the bolt in different selected positions of the seat.

The bolt 110 is connected at its upper end by a toggle link 113 to one arm 114 of a cranked lever, generally indicated 115, close to the corner of the lever which is pivoted on the seat side plate 6. The free end of the arm 114 is formed as a hand grip for use in operating the lever 115 to raise or lower the bolt 110.

The other arm 116 of the lever 115 constitutes an abutment or stop member which projects upwardly from the pivot point into engagement, or almost into engagement, with the undersurface 117 of the seat squab 1 when the squab is in its lowered position of use as shown in Figure 4. Should the seat occupant, or anyone else, attempt to pivot the lever arm 114 upwardly to release the bolt 110 from engagement with the rail while the squab is lowered, this will be prevented by the abutment of the arm 116 with the squab.

When the squab is in the upright position, as shown in Figure 5, however, the lever 115 can be pivoted freely to disengage the bolt 116 from the rail so that the seat as a whole can be moved to a different position on the rail where the bolt can be re-engaged in the appropriate aperture.

In the embodiment of Figures 7, 8a and 8b, the locking means include a vertical-axis bolt 210 carried on the inner face of a side plate 6 and having an appendage 211 which projects through and is slidable in a vertical slot 212 (Figures 8a and 8b) in the side plate 6. A helical spring 213 surrounding the bolt 210 biases the bolt into a lowered position (Figure 8a) in which it engages a selected aperture 111 in the rail 5.

The end of the appendage 211 of the bolt 210 which projects through the slot 212 is engaged in an inverted-V-shaped slot 214 in a plate 215 at one end of an arm 216 adjacent the outer face of the side plate 6. The other end of the arm 216 is pivoted at 217 on the squab-support bracket 8 of the side plate 6 so that the arm 216 actually interconnects the squab 1 and the bolt 210. The plate 215 with the slot 214 forms a sort of lost-motion coupling between the bolt 210 and the arm 216, the plate 215 being pivotable and slidable relative to the bolt appendage 211 to accommodate the angular movement of the arm 216 when the squab 1 is raised and lowered.

When the squab 1 is in its lowered position and the bolt 210 is engaged in an aperture 111 in the rail 5, the appendage 211 is near the apex of the inverted V of the slot 214, as shown in Figure 7, whereby the bolt 210 cannot be raised to release it from the rail 5. As the squab 1 is raised, however, the plate 215 slides upwardly and pivots relative to the bolt appendage 211 against a spring 218 acting between the plate 215 and the side plate 6 until the appendage is engaged by that end of one limb 219 of the slot remote from the apex and is entrained thereby to raise the bolt 210 and release it from the rail 5 (Figure 8b).

In the upright position of the squab 1, the other limb 220 of the slot 214 allows the bolt 210 to be reengaged manually in an aperture in the rail 5. This allows the seat to be locked to the rail with its squab upright and hence a plurality of seats with upright squabs to be stowed close together in the vehicle, for example, to create a load-carrying space in the area normally occupied by the seats.

As shown in Figure 7, the arm 216 may have a stop appendage 221 which projects at right angles thereto and is engageable with the front edge of the side plate 6 in two different positions when the squab 1 is in its lowered position and its upright position respectively.

In use, the side plate 6 with the arm 216 and the associated elements of the locking means are covered by a trim panel fitted to the side plate.

The apertures 111 in the rails 5 engageable by the bolts 110, 210 are preferably rectangular and are wider transversely of the rails than longitudinally thereof, in order to reduce the need for very accurate installation of the rails 5 relative to one another on the floor of the vehicle. Any transverse movement of the bolts 110, 210 in the apertures, and hence of the seats relative to the rails 5, which could be allowed by the lateral clearance between the bolts and the apertures is prevented by the engagement of the sliding blocks 6a in the outwardly-facing channels 5a of the rails 5.

As can be seen in Figure 2 and in greater detail in Figures 8a and 8b, each sliding block 6a actually comprises a metal part or core, which may be an inwardly-projecting, integral portion of the side plate 6, and upper and lower plastics blocks carried by the core and engaging respective opposite surfaces of the guide channel 5a in the rail 5. The plastics blocks are preferably made from a material with a low coefficient of friction, such as oiled nylon.

The lower plastics block bears downward forces from the seat and constitutes a runner when the seat slides, whilst the upper plastics block takes up vertical play in the channel 5a and can be accurately dimensioned for that purpose. The lower plastics block may also be dimensioned to take up lateral play in the channel 5a. The metal core is robust and of a size such as to prevent the seat escaping from the rails 5 in the event of failure of the plastics blocks.

## Claims

1. A vehicle seat of the type of which is slidable on rails (5) mounted on or adjacent the floor of the vehicle and includes a squab (1), a backrest (2), and means (110-116; 210-221) for locking the seat relative to the rails (5) in any one of a plurality of positions therealong, characterised in that the squab (1) is tiltable relative to the backrest (2) between the lowered position of use in which it is substantially horizontal and a raised or stowed position in which it is substantially vertical, and in that the locking means include a bolt (110; 210) for engagement in any one of a plurality of spaced-apart apertures (111) in a respective rail (5) to prevent the seat from moving longitudinally on the rail from a selected position and a control member (115; 216) acting between the bolt (110; 210) and the seat squab (1) to prevent the bolt (110; 210) from being disengaged from the rail (5) when the squab (1) is in its lowered position.

2. A vehicle seat according to Claim 1, characterised in that the bolt (110; 210) is spring-loaded so that it is biased into engagement with the apertures (111) in the rail (5) but can be engaged manually with the rail (5) when the squab (1) is raised.

3. A vehicle seat according to Claim 1 or Claim 2, characterised in that the control member comprises a lever (115) which is pivoted on the seat and one arm (116) of which projects upwardly so as to be engageable with the undersurface (117) of the squab (1) in the lowered position thereof, the other arm (114) of the lever (115) being connected by a toggle link (113) to the bolt (110).

4. A vehicle seat according to Claim 1 or Claim 2, characterised in that the control member comprises an arm (216) which is pivoted at one end (217) on the squab (1) and at its other end (215) on the bolt (210) whereby the raising and lowering of the squab (1) respectively releases the bolt (210) from and engages it with the rail (5).

5. A vehicle seat according to Claim 4, characterised in that the pivotal connection between the arm (216) and the bolt (210) is formed by a plate (215) having a slot (214) in which an appendage (211) of the bolt is engaged and which is of a shape such as to allow the bolt (210) to be re-engaged manually with the rail (5) when the squab (1) is raised.

6. A vehicle seat according to any of the preceding claims, characterised in that the seat is mounted on the rails (5) by means of sliding blocks (6a) slidable in guide channels (5a) in the rails (5) and the rails have upper flanges (112) defining the apertures (111) engageable by the bolts (110-210), and in that the apertures (111) are wider transversely of the rails (5) than longitudinally thereof to allow lateral clearance between the bolts and the apertures, the engagement of the sliding blocks (6a) in the guide channels (5a) of the rails (5) preventing any transverse movement of the bolts (110;210) in the apertures (111).

7. A vehicle seat according to any of the preceding claims, characterised in that the squab (1) and the backrest (2) of the seat are supported between two side support structures (4) which can be mounted slidably on respective raids (5), the side support structures (4) being interconnected by a cross member (7) beneath the level of the squab (1), and in that one support structure has an upper anchorage point (25) for a seat belt (23) and first and second lower anchorage points (22; 27, 28) for a seat belt are provided at opposite sides of the squab (1) such that, in use, a seat belt (23) having a lap portion extending across the seat occupant's lap between the lower anchorage points (23; 27, 28) and a body portion extending diagonally across the occupant's body from the second lower anchorage (27, 28) point to the upper anchorage point (25) will restrain the occupant in the seat during a collision, the collision forces being withstood by the seat itself.

8. A vehicle seat according to Claim 7, characterised in that each side support structure (4) of the seat comprises a lower structure (6) which is mounted on the respective rail (5) and an upper pillar (15) which is pivotally mounted on the lower structure (6), the two lower structures (6) being interconnected by the cross beam (7) and supporting the squab (1) pivotably between them and the two pillars (15) supporting the backrest (2) between them and being pivotable at least between an upright position of use of the backrest and a reclined position of use.

9. A vehicle seat according to Claim 8, characterised in that each lower side support structure (6) is mounted on its rail (5) at two positions spaced apart forwardly and rearwardly of the centre of gravity of the seat and its occupant.

Fig. 1

Fig. 2

Fig. 3

EP 0 476 977 A1

Fig. 4

Fig. 5

Fig. 6

Fig. 7

2    15

217

1

10

216

221    218
215
8    211
214    220
219
111
210

111

5
5a    6a

Fig 8a

216

215
6    212
210    211
213    214

5    6a

Fig 8b

216
215
6    214
210    211
212
213
111
6a
5

**European Patent Office**

## EUROPEAN SEARCH REPORT

Application Number

EP 91 30 8481

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 949 931 (FUJIWARA)<br>* the whole document * | 1,2,4 | B60N2/08<br>B60N2/24 |
| Y | | 6-9 | |
| Y | FR-A-2 385 928 (ROB. HAMMERSTEIN)<br>* page 1, line 1 - page 4, line 16; figures 1-3,6 * | 6 | |
| A | | 1 | |
| Y | EP-A-0 363 261 (ECIA)<br>* column 1, line 1 - column 2, line 14; figure 1 * | 7-9 | |
| A | | 1 | |
| A | DE-A-3 022 344 (DAIMLER-BENZ)<br>* page 4 - page 5; figures 2,6 * | 1,6 | |
| A | EP-A-0 108 948 (AUDI AG)<br>* page 1 - page 4; figure * | 1,9 | |

TECHNICAL FIELDS SEARCHED (Int. Cl.5)

B60N

The present search report has been drawn up for all claims

| Place of search | Date of completion of the search | Examiner |
|---|---|---|
| THE HAGUE | 29 NOVEMBER 1991 | GATTI Carlo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)